# EUROPÄISCHE PATENTSCHRIFT

(11) **EP 1 760 680 B1**
(45) Veröffentlichungstag und Bekanntmachung des Hinweises auf die Patenterteilung: **28.07.2010**
(21) Anmeldenummer: 06018060.1
(22) Anmeldetag: 30.08.2006
(51) Int. Cl.: G09F 3/06, G09F 3/20

(54) **Kennzeichnungsschild**
Identification plate
Panneau pour l'identification

(30) Priorität: 01.09.2005 DE 102005041688; 25.01.2006 DE 102006003780
(43) Veröffentlichungstag der Anmeldung: 07.03.2007
(73) Patentinhaber: Murrplastik Systemtechnik GmbH, 71570 Oppenweiler (DE)
(72) Erfinder: Scharf-Martini, Lutz, 73614 Schondorf (DE)
(74) Vertreter: Reule, Hanspeter

(56) Entgegenhaltungen:
- DE-A1- 2 829 620
- DE-A1- 3 725 217
- DE-U- 1 959 596
- DE-U1- 9 417 391
- FR-A1- 2 724 250
- "SNAP-ON LOGO" IBM TECHNICAL DISCLOSURE BULLETIN, IBM CORP. NEW YORK, US, Bd. 32, Nr. 8A, Januar 1990 (1990-01), Seiten 254-255, XP000082793 ISSN: 0018-8689

## Beschreibung

Die Erfindung betrifft ein Kennzeichnungsschild gemäß Oberbegriff des Anspruchs 1. Ein solches Kennzeichnungsschild ist aus DE-U-87 03 202 bekannt.

Ein Kennzeichnungsschild mit 4 Rastbeinen ist aus DE-U-9417391 bekannt.

Bekannte Kennzeichnungsschilder, weisen vier Rastbeine mit jeweils ungefähr quadratischem Querschnitt auf. Dadurch sind die Rastbeine zum Einrasten der Rastkonturen in eine Aufnahmegeometrie auf einfache Weise biegsam. Sie können jedoch leicht abbrechen.

Es ist daher Aufgabe der Erfindung, einen Kennzeichnungsschildersatz der eingangs genannten Art derart weiterzubilden, dass er einfacher für die Kennzeichnung von Bauelementen verwendet werden kann. Desweiteren ist es Aufgabe der Erfindung, ein Kennzeichnungsschild zu entwickeln, dessen Rastbeine weniger leicht abbrechen.

Die Aufgabe wird erfindungsgemäß durch ein Kennzeichnungsschild mit den Merkmalen des Anspruchs 1 gelöst. Vorteilhafte Weiterbildungen der Erfindung sind Gegenstand der abhängigen Ansprüche.

Gemäß der Erfindung spannen die Befestigungsstellen jedes Kennzeichnungsschilds ein regelmäßiges Viereck auf. Dabei sind die Rastkonturen von bei Draufsicht auf die Befestigungsseite in einer Umfangsrichtung des Vierecks aufeinanderfolgenden Rastbeinen dem jeweils folgenden Rastbein abgewandt, und die Rastbeine weisen in einer ersten Richtung, in der die Rastkonturen vorstehen, eine geringere Breite auf als in einer zweiten, quer zur ersten Richtung und parallel zur Trägerplatte verlaufenden Richtung. Einander diagonal gegenüberliegende Rastbeine weisen damit Rastkonturen auf, die in Richtungen vorstehen, welche miteinander einen Winkel von 180° einschließen. Der Kennzeichnungsschildersatz kann dann sowohl an parallel zur Reihe der Kennzeichnungsschilder verlaufenden Rastschienen als auch an quer zur Reihe der Kennzeichnungsschilder verlaufenden Rastschienen eingerastet werden. Hierbei wird bevorzugt, dass die Rastbeine im Querschnitt rechteckig sind.

Desweiteren wird bevorzugt, dass bei mindestens einem Kennzeichnungsschild die die Rastkontur aufweisende Seitenfläche jedes Rastbeins fluchtend zu einer der Seitenflächen des bei Draufsicht auf die Befestigungsseite in einer Umfangsrichtung des Vierecks folgenden Rastbeins angeordnet ist. Dies ergibt eine besonders gute Befestigung, da stets ein Rastbein an einer Rastschiene eingerastet ist, während das in Umfangsrichtung folgende Rastbein an derselben Rastschiene anliegt. Die Kennzeichnungsschilder sind dann nicht oder nur begrenzt um eine senkrecht zur Trägerplatte verlaufenden Achse verdrehbar.

Im Folgenden wird die Erfindung anhand eines in der Zeichnung schematisch dargestellten Ausführungsbeispiels näher erläutert. Es zeigen
- Fig. 1: einen Teil eines Kennzeichnungsschildersatzes gemäß einem ersten Ausführungsbeispiel in der Draufsicht auf die Befestigungsseite der Kennzeichnungsschilder;
- Fig. 2a, 2b: ein Kennzeichnungsschild in einer Seitenansicht bzw. in einer Draufsicht auf die Befestigungsseite;
- Fig. 3: eine Anordnung von vier an Zentralträger angeformten Kennzeichnungsschildersätzen gemäß einem zweiten Ausführungsbeispiel in der Draufsicht; und
- Fig. 4a, 4b, 4c: drei Ausführungsvarianten der Kennzeichnungsschildersätze gemäß Fig. 3 im Schnitt.

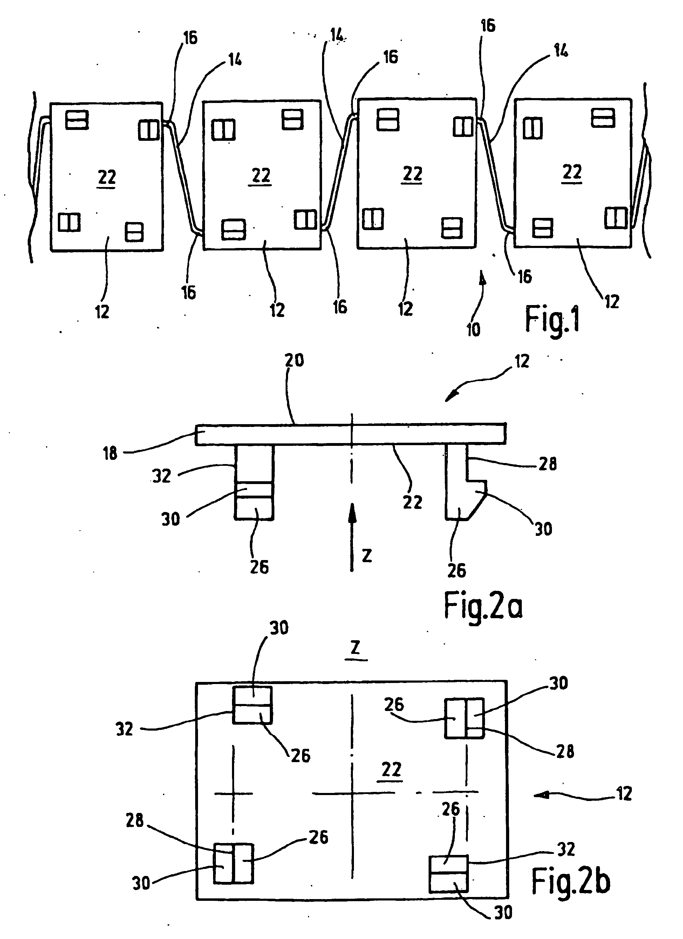

Ein Kennzeichnungsschildersatz 10 gemäß Fig. 1 weist mehrere, in einer Reihe angeordnete Kennzeichnungsschilder 12 auf, von denen in Fig. 1 vier gezeigt sind. Die in der Reihe aufeinanderfolgenden Kennzeichnungsschilder 12 sind jeweils mittels eines Verbindungsstegs 14 miteinander verbunden, der mit jedem seiner beiden Enden 16 an einem Kennzeichnungsschild 12 angeformt ist. Der gesamte Kennzeichnungsschildersatz 10, bestehend aus Kennzeichnungsschildern 12 und Verbindungsstegen 14, ist einstückig als Spritzgussteil aus Kunststoff ausgebildet. Die Verbindungsstege 14 sind nahe ihren Enden 16 elastisch biegsam, so dass durch Verformung der Verbindungsstege 14 der Abstand der Kennzeichnungsschilder 12 variiert werden kann. Hierzu kann die Reihe der Kennzeichnungsschilder 12 ziehharmonikaartig gestreckt oder gestaucht werden.

Die Kennzeichnungsschilder 12 (Fig. 2a, 2b) weisen jeweils eine Trägerplatte 18 auf, die auf ihrer einen Seite eine ebene Kennzeichnungsfläche 20 aufweist. Auf der Kennzeichnungsfläche 20 kann, beispielsweise durch Bedrucken, eine Kennzeichnung angebracht werden. An der der Kennzeichnungsfläche 20 gegenüberliegenden Befestigungsseite 22 sind an vier ein regelmäßiges Viereck aufspannenden Befestigungsstellen vier Rastbeine 26 angeformt. Die Rastbeine 26 weisen jeweils einen rechteckigen Querschnitt auf, wobei jeweils an einer breiten Seitenfläche 28 eine Rastkontur 30 vorsteht. Die Rastbeine 26 sind so angeordnet, dass jede Rastkontur 30 dem bei Draufsicht auf die Befestigungsseite 22 in einer Umfangsrichtung des regelmäßigen Vierecks entgegen dem Uhrzeigersinn folgenden Rastbein 26 abgewandt ist. Die breiten Seitenflächen 28 der Rastbeine 26, aus denen die Rastkonturen 30 vorstehen, fluchten mit einer schmalen Seitenfläche 32 des im Uhrzeigersinn folgenden Rastbeins 26.

Die in der Reihe des Kennzeichnungsschildersatzes 10 aufeinanderfolgenden Kennzeichnungsschilder 12 sind symmetrisch zueinander angeordnet. Bezüglich einer zwischen zwei benachbarten Kennzeichnungsschildern 12 verlaufenden Mittelebene ist jedes Kennzeichnungsschild 12 das Spiegelbild des mit ihm verbundenen Kennzeichnungsschilds.

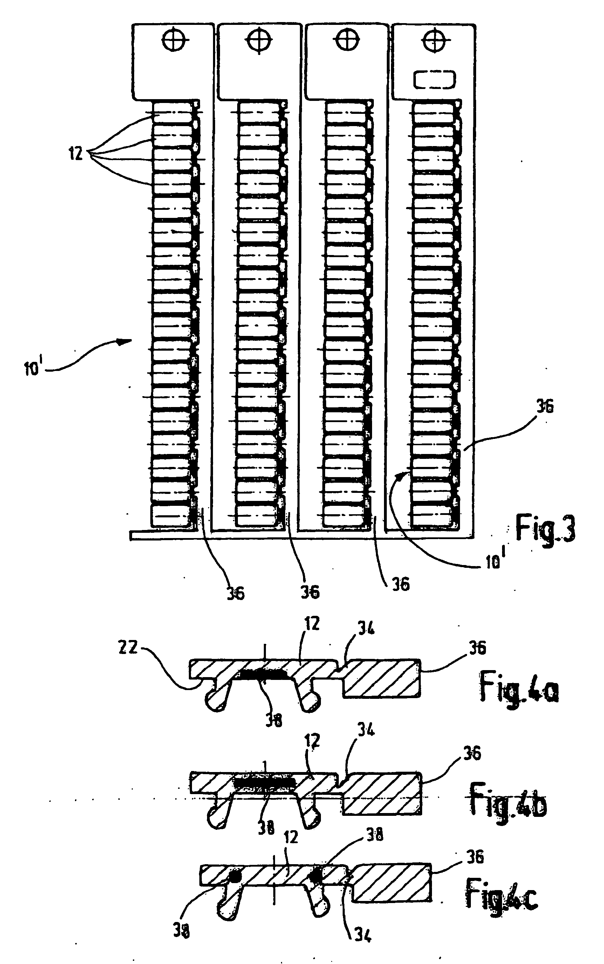

Die Kennzeichnungsschildersätze 10' gemäß dem zweiten Ausführungsbeispiel (Fig. 3, 4a bis 4c) unterscheiden sich von denen des ersten Ausführungsbeispiels hauptsächlich darin, dass ihre Verbindungsstege 14 aus einem anderen Material bestehen als die Trägerplatten 18. Während die Trägerplatten 18 aus einem im Wesentlichen starren Kunststoffmaterial gefertigt sind, sind die Verbindungsstege 14 aus einem thermoplastischen Elastomer gefertigt, so dass eine Vergrößerung des Abstands zweier benachbarter Kennzeichnungsschilder 12 eine elastische Dehnung des verbindenden Verbindungsstegs 14 gegen eine Rückstellkraft bewirkt. Die Kennzeichnungsschilder 12 sind zudem über Sollbruchstellen aufweisende Trennstege 34 an den Zentralträgern 36 einstückig angeformt. Des Weiteren sind die Verbindungsstege 14, im Gegensatz zum ersten Ausführungsbeispiel, nicht einzeln an den Kennzeichnungsschildern 12 angebracht. Sie sind vielmehr einstückig zusammenhängend ausgebildet und bilden eine Verbindungseinheit 38, die sich über die Länge der Kennzeichnungsschildersätze 10' erstreckt. Die jeweilige Verbindungseinheit 38 kann dabei, wie in Fig. 4a dargestellt, an der Befestigungsseite 22 der Trägerplatten 18 aufgeklebt sein. Bei der Ausführungsvariante gemäß Fig. 4b erstreckt sich eine Verbindungseinheit 38 durch die Trägerplatten 18 hindurch, während sich bei der Ausführungsvariante gemäß Fig. 4c zwei parallel zueinander angeordnete Verbindungseinheiten 38 durch die Trägerplatten 18 hindurch erstrecken.

Zur Herstellung der Anordnung gemäß Fig. 3 kommen bevorzugt zwei Verfahren zur Anwendung. Gemäß dem ersten vorgeschlagenen Herstellungsverfahren werden die Verbindungseinheiten 38 vorgefertigt und in eine Spritzgussform eingelegt. Anschließend wird das Kunststoffmaterial zur Bildung der Kennzeichnungsschilder 12 und der Zentralträger 36 in die Spritzgussform eingespritzt und umschließt die Verbindungseinheiten 38, wie in Fig. 4b und Fig. 4c gezeigt. Beim zweiten Herstellungsverfahren werden zunächst in einer Spritzgussform die Kennzeichnungsschilder 12 und die Zentralträger 36 als einstückiges Spritzgussteil hergestellt. In die Spritzgussform sind Dorne eingelegt, die in ihrer Form der Form der Verbindungseinheiten 38 entsprechen und die den Platz für die Verbindungseinheiten 38 freihalten. Nach Herstellung der Kennzeichnungsschilder 12 werden die Dorne herausgezogen und an ihrer Stelle wird das thermoplastische Elastomer zur Bildung der Verbindungseinheiten 38 eingespritzt.

## Patentansprüche

1. Kennzeichnungsschild mit einer Trägerplatte (18), die eine Kennzeichnungsfläche (20) zur Aufnahme einer Kennzeichnung aufweist und die an einer der Kennzeichnungsfläche (20) abgewandten Befestigungsseite (22) an vier Befestigungsstellen vier Rastbeine (26) trägt, von denen jedes genau eine aus einer seiner Seitenflächen (28) vorstehende Rastkontur (30) trägt, wobei die Befestigungsstellen ein regelmäßiges Viereck aufspannen, **dadurch gekennzeichnet, dass** die Rastkonturen (30) von bei Draufsicht auf die Befestigungsseite (22) in einer Umfangsrichtung des Vierecks aufeinanderfolgenden Rastbeinen (26) dem jeweils folgenden Rastbein (26) abgewandt sind und dass die Rastbeine (26) in einer ersten Richtung, in der die Rastkonturen (30) vorstehen, eine geringere Breite aufweisen als in einer zweiten, quer zur ersten Richtung und parallel zur Trägerplatte (18) verlaufenden Richtung.

2. Kennzeichnungsschild nach Anspruch 1, **dadurch gekennzeichnet, dass** die Rastbeine (26) im Querschnitt rechteckig sind.

3. Kennzeichnungsschild nach Anspruch 1 oder 2, **dadurch gekennzeichnet, dass** die die Rastkontur aufweisende Seitenfläche (28) jedes Rastbeins (26) fluchtend zu einer der Seitenflächen (32) des bei Draufsicht auf die Befestigungsseite in einer Umfangsrichtung des Vierecks folgenden Rastbeins (26) angeordnet ist.

4. Kennzeichnungsschildersatz mit mehreren, in einer Reihe angeordneten und miteinander verbundenen Kennzeichnungsschildem (12), nach Anspruch 1 (20), die an einer der Kennzeichnungsfläche (20) abgewandten Befestigungsseite (22) Rastbeine (26) mit aus ihren Seitenflächen (28) vorstehenden Rastkonturen (30) tragen wobei die in der Reihe aufeinander folgenden Kennzeichnungsschilder (12) mittels Verbindungsstegen (14) miteinander verbunden sind, und wobei die Verbindungsstege (14) zum Variieren der Abstände zwischen den Kennzeichnungsschildem (12) verformbar sind, **dadurch gekennzeichnet, dass** die Trägerplatten (18) aus einem im Wesentlichen starren Kunststoffmaterial bestehen und dass die Verbindungsstege (14) aus einem gegen eine Rückstellkraft elastisch dehnbaren Material bestehen.

5. Kennzeichnungsschildersatz nach Anspruch 4, **dadurch gekennzeichnet, dass** die Verbindungsstege (14) aus Gummi oder einem vorzugsweise thermoplastischen Elastomer bestehen.

6. Kennzeichnungsschildersatz nach Anspruch 4 oder 5, **dadurch gekennzeichnet, dass** zumindest ein Teil der Verbindungsstege (14) einstückig zusammenhängt und eine mehrere Kennzeichnungsschilder (12) miteinander verbindende Verbindungseinheit (38) bildet.

7. Kennzeichnungsschildersatz nach Anspruch 6, **dadurch gekennzeichnet, dass** die Verbindungseinheit (38) stoff- oder kraftschlüssig mit den Trägerplatten (18) verbunden, vorzugsweise mit ihnen verklebt ist.

8. Kennzeichnungsschildersatz nach Anspruch 6 oder 7, **dadurch gekennzeichnet, dass** sich die Verbindungseinheit (38) durch die Trägerplatten (18) hindurch erstreckt.

9. Kennzeichnungsschildersatz nach einem der Ansprüche 4 bis 8, **dadurch gekennzeichnet, dass** jede Trägerplatte (18) an ihrer Befestigungsseite (22) an vier Befestigungsstellen je ein Rastbein (26) trägt.

10. Kennzeichnungsschildersatz nach einem der Ansprüche 4 bis 9, **dadurch gekennzeichnet, dass** die Rastbeine (26) und die Rastkonturen (30) zweier in der Reihe aufeinander folgender Kennzeichnungsschilder (12) symmetrisch bezüglich einer in der Mitte zwischen den Kennzeichnungsschildem (12) verlaufenden Symmetrieebene angeordnet sind.

11. Kennzeichnungsschildersatz nach einem der Ansprüche 9 oder 10, **dadurch gekennzeichnet, dass** die Befestigungsstellen jedes Kennzeichnungsschilds (12) ein regelmäßiges Viereck aufspannen, dass die Rastkonturen (30) von bei Draufsicht auf die Befestigungsseite (22) in einer Umfangsrichtung des Vierecks aufeinanderfolgenden Rastbeinen (26) dem jeweils folgenden Rastbein (26) abgewandt sind und dass die Rastbeine (26) in einer ersten Richtung, in der die Rastkonturen (30) vorstehen, eine geringere Breite aufweisen als in einer zweiten, quer zur ersten Richtung und parallel zur Trägerplatte (18) verlaufenden Richtung.

12. Kennzeichnungsschildersatz nach einem der Ansprüche 4 bis 11, **dadurch gekennzeichnet, dass** die Rastbeine (26) im Querschnitt rechteckig sind.

13. Kennzeichnungsschildersatz nach einem der Ansprüche 11 oder 12, **dadurch gekennzeichnet, dass** bei mindestens einem Kennzeichnungsschild (12) die die Rastkontur (30) aufweisende Seitenfläche (28) jedes Rastbeins (26) fluchtend zu einer der Seitenflächen (32) des bei Draufsicht auf die Befestigungsseite (22) in einer Umfangsrichtung des Vierecks folgenden Rastbeins (26) angeordnet ist.

14. Anordnung von Kennzeichnungsschildersätzen nach einem der Ansprüche 6 bis 13, **dadurch gekennzeichnet, dass** jeder der Kennzeichnungsschildersätze (10') mit jedem seiner Kennzeichnungsschilder (12) an einen Zentralträger (36) angeformt ist und dass die Zentralträger (36) an ihren Enden miteinander verbunden sind.

15. Verfahren zur Herstellung einer Anordnung von Kennzeichnungsschildersätzen nach Anspruch 14, **dadurch gekennzeichnet, dass** in einem ersten Verfahrensschritt die Verbindungseinheiten (38) vorgefertigt und in eine Spritzgussform eingelegt werden, und dass in einem zweiten Verfahrensschritt das Kunststoffmaterial zur Bildung der Kennzeichnungsschilder (12) und der Zentralträger (36) in die Spritzgussform gespritzt wird.

16. Verfahren zur Herstellung einer Anordnung von Kennzeichnungsschildersätzen nach Anspruch 14, **dadurch gekennzeichnet, dass** in einem ersten Spritzgussprozess die Kennzeichnungsschilder (12) und die Zentralträger (36) hergestellt werden, wobei mittels mehrerer Dome Platz für die Verbindungseinheiten (38) freigehalten wird, dass anschließend die Dome entfernt werden und dass in einem zweiten Spritzgussprozess das Material für die Verbindungseinheiten (38) eingespritzt wird.

## Claims

1. Identification plate, having a carrier plate (18), which has an identification surface (20) for accepting an identification and which on a fastening side (22) facing away from the identification surface (20) carries four latching legs (26) at four fastening points, each of which latching legs (26) carries just one latching contour (30) protruding from one of its side faces (28), wherein the fastening points span a regular quadrilateral, **characterised in that** the latching contours (30) of latching legs (26), which in a plan view of the fastening side (22) follow one another in the circumferential direction of the square, face away from the respectively following latching leg (26), and **in that** the latching legs (26) in a first direction, in which the latching contours (30) protrude, have a narrower width than in a second direction running transverse to the first direction and parallel to the carrier plate (18).

2. Identification plate according to Claim 1, **characterised in that** the latching legs (26) are rectangular in cross-section.

3. Identification plate according to Claim 1 or 2, **characterised in that** the side face (28), which possesses the latching contour, of each latching leg (26) is arranged flush with one of the side faces (32) of the latching leg (26) which in a plan view of the fastening side follows in the circumferential direction of the square.

4. Set of identification plates having a plurality of identification plates (12), which are arranged in a row and connected to one another according to Claim 1, which on a fastening side (22) facing away from the identification surfaces (20) carry latching legs (26) having latching contours (30) protruding from their side faces (28), wherein the identification plates (12) following one another in the row can be connected to one another by means of connecting rods (14), and wherein the connecting rods (14) can be deformed to vary the distances between the identification plates (12), **characterised in that** the carrier plates (18) consist of an essentially rigid plastic material, and **in that** the connecting rods (14) consist of a material which can be elastically stretched against a restoring force.

5. Set of identification plates according to Claim 4, **characterised in that** the connecting rods (14) consist of rubber or of a preferably thermoplastic elastomer.

6. Set of identification plates according to Claim 4 or 5, **characterised in that** at least a part of the connecting rods (14) is connected in one piece and forms a connecting unit (38) connecting a plurality of identification plates (12) to one another.

7. Set of identification plates according to Claim 6, **characterised in that** the connecting unit (38) is connected to the carrier plates (18) in a firmly bonded or non-positive manner and is preferably glued to them.

8. Set of identification plates according to Claim 6 or 7, **characterised in that** the connecting unit (38) extends through the carrier plates (18).

9. Set of identification plates according to any one of Claims 4 to 8, **characterised in that** each carrier plate (18) on its fastening side (22) carries a latching leg (26) at each of the four fastening points.

10. Set of identification plates according to any one of Claims 4 to 9, **characterised in that** the latching legs (26) and the latching contours (30) of two identification plates (12) following one another in the row are arranged symmetrically relative to a plane of symmetry running down the middle between the identification plates (12).

11. Set of identification plates according to Claim 9 or 10, **characterised in that** the fastening points of each identification plate (12) span a regular quadrilateral, **in that** the latching contours (30) of latching legs (26), which in a plan view of the fastening side (22) follow one another in the circumferential direction of the square, face away from the respectively following latching leg (26), and **in that** the latching legs (26) in a first direction, in which the latching contours (30) protrude, have a narrower width than in a second direction running transverse to the first direction and parallel to the carrier plate (18).

12. Set of identification plates according to any one of Claims 4 to 11, **characterised in that** the latching legs (26) are rectangular in cross-section.

13. Set of identification plates according to Claim 11 or 12, **characterised in that** with at least one identification plate (12) the side face (28), which possesses the latching contour (30), of each latching leg (26) is arranged flush with one of the side faces (32) of the latching leg (26) which in a plan view of the fastening side (22) follows in the circumferential direction of the square.

14. Arrangement of sets of identification plates according to any one of Claims 6 to 13, **characterised in that** each of the sets of identification plates (10') is formed with each of its identification plates (12) onto a central carrier (36), and **in that** the central carriers (36) are connected to one another at their ends.

15. Method for producing an arrangement of sets of identification plates according to Claim 14, **characterised in that** in a first method step the connecting units (38) are pre-fabricated and inserted into an injection mould, and **in that** in a second method step the plastic material for forming the identification plates (12) and the central carriers (36) is injected into the injection mould.

16. Method for producing an arrangement of sets of identification plates according to Claim 14, **characterised in that** the identification plates (12) and the central carriers (36) are produced in a first injection-moulding process, wherein space is reserved for the connecting units (38) by means of a plurality of mandrels, **in that** subsequently the mandrels are removed, and **in that** the material for the connecting units (38) is injected in a second injection-moulding process.

## Revendications

1. Plaque d'identification, comprenant une plaque de support (18) qui présente une surface d'identification (20) pour recevoir une identification et qui porte, sur un côté de fixation (22) opposé à la surface d'identification (20), en quatre points de fixation, quatre pieds d'enclenchement (26) présentant chacun exactement un contour d'enclenchement (30) dépassant d'une de ses faces latérales (28), sachant que les points de fixation définissent un quadrilatère régulier, **caractérisée en ce que** les contours d'enclenchement (30) de pieds d'enclenchement (26) qui, en vue de dessus sur le côté de fixation (22), se succèdent dans une direction périphérique du quadrilatère sont opposés au pied d'enclenchement (26) respectivement consécutif, et **en ce que** les pieds d'enclenchement (26) présentent, dans une première direction dans laquelle dépassent les contours d'enclenchement (30), une plus petite largeur que dans une deuxième direction s'étendant transversalement à la première direction et parallèlement à la plaque de support (18).

2. Plaque d'identification selon la revendication 1, **caractérisée en ce que** les pieds d'enclenchement (26) sont rectangulaires en coupe transversale.

3. Plaque d'identification selon la revendication 1 ou 2, **caractérisée en ce que** la face latérale (28) de chaque pied d'enclenchement (26), laquelle présente le contour d'enclenchement, est disposée en alignement avec une des faces latérales (32) du pied d'enclenchement (26) qui, en vue de dessus sur le côté de fixation, est le suivant dans une direction périphérique du quadrilatère.

4. Groupe de plaques d'identification comportant plusieurs plaques d'identification (12) selon la revendication 1, disposées en une rangée et reliées entre elles, qui portent, sur un côté de fixation (22) opposé à la surface d'identification (20), des pieds d'enclenchement (26) pourvus de contours d'enclenchement (30) dépassant de leurs faces latérales (28), sachant que les plaques d'identification (12) qui se succèdent dans la rangée sont reliées entre elles au moyen de barrettes de liaison (14), et sachant que les barrettes de liaison (14) sont déformables afin de faire varier les distances entre les plaques d'identification (12), **caractérisé en ce que** les plaques de support (18) sont constituées d'une matière plastique essentiellement rigide, et **en ce que** les barrettes de liaison (14) sont constituées d'un matériau élastiquement extensible à l'encontre d'une force de rappel.

5. Groupe de plaques d'identification selon la revendication 4, **caractérisé en ce que** les barrettes de liaison (14) sont constituées de caoutchouc ou d'un élastomère de préférence thermoplastique.

6. Groupe de plaques d'identification selon la revendication 4 ou 5, **caractérisé en ce qu'**au moins une partie des barrettes de liaison (14) sont solidarisées d'un seul tenant et forment une unité de liaison (38) reliant entre elles plusieurs plaques d'identification (12).

7. Groupe de plaques d'identification selon la revendication 6, **caractérisé en ce que** l'unité de liaison (38) est reliée aux plaques de support (18) par liaison de matière ou par adhérence, de préférence est assemblée par collage à celles-ci.

8. Groupe de plaques d'identification selon la revendication 6 ou 7, **caractérisé en ce que** l'unité de liaison (38) s'étend à travers les plaques de support (18).

9. Groupe de plaques d'identification selon l'une des revendications 4 à 8, **caractérisé en ce que** chaque plaque de support (18) porte, sur son côté de fixation (22), un pied d'enclenchement respectif (26) en chacun de quatre points de fixation.

10. Groupe de plaques d'identification selon l'une des revendications 4 à 9, **caractérisé en ce que** les pieds d'enclenchement (26) et les contours d'enclenchement (30) de deux plaques d'identification (12) qui se succèdent dans la rangée sont disposés symétriquement par rapport à un plan de symétrie s'étendant au milieu entre les plaques d'identification (12).

11. Groupe de plaques d'identification selon l'une des revendications 9 ou 10, **caractérisé en ce que** les points de fixation de chaque plaque d'identification (12) définissent un quadrilatère régulier, **en ce que** les contours d'enclenchement (30) de pieds d'enclenchement (26) qui, en vue de dessus sur le côté de fixation (22), se succèdent dans une direction périphérique du quadrilatère sont opposés au pied d'enclenchement (26) respectivement consécutif, et **en ce que** les pieds d'enclenchement (26) présentent, dans une première direction dans laquelle dépassent les contours d'enclenchement (30), une plus petite largeur que dans une deuxième direction s'étendant transversalement à la première direction et parallèlement à la plaque de support (18).

12. Groupe de plaques d'identification selon l'une des revendications 4 à 11, **caractérisé en ce que** les pieds d'enclenchement (26) sont rectangulaires en coupe transversale.

13. Groupe de plaques d'identification selon l'une des revendications 11 ou 12, **caractérisé en ce que**, pour au moins une plaque d'identification (12), la face latérale (28) de chaque pied d'enclenchement (26), laquelle présente le contour d'enclenchement, est disposée en alignement avec une des faces latérales (32) du pied d'enclenchement (26) qui, en vue de dessus sur le côté de fixation (22), est le suivant dans une direction périphérique du quadrilatère.

14. Ensemble de groupes de plaques d'identification selon l'une des revendications 6 à 13, **caractérisé en ce que** chacun des groupes de plaques d'identification (10') est rapporté par chacune de ses plaques d'identification (12) sur un élément porteur central (36), et **en ce que** les éléments porteurs centraux (36) sont reliés entre eux à leurs extrémités.

15. Procédé de fabrication d'un ensemble de groupes de plaques d'identification selon la revendication 14, **caractérisé en ce que**, au cours d'une première étape du procédé, les unités de liaison (38) sont préfabriquées et mises en place dans un moule d'injection, et **en ce que**, au cours d'une deuxième étape du procédé, la matière plastique destinée à former les plaques d'identification (12) et les éléments porteurs centraux (36) est injectée dans le moule d'injection.

16. Procédé de fabrication d'un ensemble de groupes de plaques d'identification selon la revendication 14, **caractérisé en ce que**, au cours d'un premier processus de moulage par injection, on fabrique les plaques d'identification (12) et les éléments porteurs centraux (36), sachant qu'au moyen de plusieurs mandrins, on réserve de la place pour les unités de liaison (38), **en ce qu'**on retire ensuite les mandrins et **en ce que**, au cours d'un deuxième processus de moulage par injection, on injecte le matériau pour les unités de liaison (38).
